# EUROPÄISCHE PATENTSCHRIFT

(11) **EP 3 704 363 B1**
(45) Veröffentlichungstag und Bekanntmachung des Hinweises auf die Patenterteilung: **08.12.2021**
(21) Anmeldenummer: 18793646.3
(22) Anmeldetag: 26.10.2018
(51) Int. Cl.: F01N 3/025, F01N 3/035, F01N 3/10, F01N 3/20, F01N 3/22, F01N 3/30, F01N 9/00, F01N 11/00, F01N 13/00, F02D 41/02

(54) **VERFAHREN ZUM BETRIEB EINER ABGASANLAGE**
METHOD FOR OPERATING AN EXHAUST SYSTEM
PROCÉDÉ D'OPÉRATION D'UN SYSTÈME DES GAZ D'ÉCHAPPEMENT

(30) Priorität: 30.10.2017 DE 102017125406
(43) Veröffentlichungstag der Anmeldung: 09.09.2020
(73) Patentinhaber: Volkswagen Aktiengesellschaft, 38440 Wolfsburg (DE)
(72) Erfinder: SUDSCHAJEW, David, 38527 Abbesbüttel (DE)
(74) Vertreter: karo IP
(86) Internationale Anmeldenummer: PCT/EP2018/079362
(87) Internationale Veröffentlichungsnummer: WO 2019/086333

(56) Entgegenhaltungen:
- EP-A1- 2 696 047
- WO-A1-2017/092839
- DE-A1-102017 116 405
- US-A1- 2010 205 936
- US-B2- 9 399 185

## Beschreibung

Die Erfindung betrifft ein Verfahren zum Betrieb einer Abgasanlage. Die Abgasanlage ist insbesondere in einem Kraftfahrzeug mit einer Verbrennungskraftmaschine einsetzbar. Das Verfahren kann in einem Kraftfahrzeug durchgeführt werden. Die Verbrennungskraftmaschine ist insbesondere ein Otto-Motor.

Die Abgasanlage ist stromabwärts der Verbrennungskraftmaschine anordenbar und weist entlang einer Strömungsrichtung eines Abgases eine erste Abgasbehandlungsvorrichtung, umfassend zumindest einen Partikelfilter und einen ersten Katalysator, sowie einen zweiten Katalysator auf.

Aus der DE 10 2010 046 896 A1 ist eine Abgasanlage bekannt.

Der Partikelfilter hat die Aufgabe, das Abgas einer Verbrennungskraftmaschine von Partikeln zu befreien. Dabei werden die Partikel (Ruß) im Partikelfilter abgeschieden und das Abgas so gereinigt. In Folge der Beladung des Partikelfilters mit Ruß treten ein Leistungsverlust der Verbrennungskraftmaschine, höherer Kraftstoffverbrauch oder auch Zündaussetzer auf. Aus diesen Gründen wird der Partikelfilter zyklisch oder in Abhängigkeit von der Beladung mit Ruß regeneriert.

Neben der Emission von Ruß entstehen ebenfalls anorganische Partikel, die als Asche bezeichnet werden. Asche entsteht in erster Linie aus der Verbrennung des in der Verbrennungskraftmaschine eingesetzten Schmieröls. Insbesondere erfolgt dies bei der Verbrennung im Kaltstart, in den Schubphasen oder bei Volllast. Diese Verbrennung erfolgt jedoch nicht nur bei den vorstehend genannten Betriebspunkten sondern (in geringerem Maß) kontinuierlich in Abhängigkeit von einer Last (Drehmoment) und Drehzahl (der Kurbelwelle der Verbrennungskraftmaschine). Bei der Verbrennung des Schmieröls werden je nach dessen Zusammensetzung (z. B. enthält das Schmieröl Phosphor und Mangan) mehr oder weniger Asche-Partikel gebildet. Die Asche-Partikel werden ebenfalls durch den Partikelfilter infolge von Abscheidung der Asche-Partikel zurückgehalten. Die Abscheidung erfolgt in Form von Diffusion, wobei sich die Asche-Partikel an der Oberfläche des Partikelfilter-Substrats anlagern.

Diese Abscheidung von Asche-Partikeln an der Oberfläche eines Partikelfilters kann eine katalytische Beschichtung an dem Partikelfilter deaktivieren. Die Asche (im Partikelfilter) kann nicht regeneriert und auch nicht entfernt werden. Somit führen die Asche-Partikel zu einer irreversiblen Deaktivierung der katalytischen Beschichtung. Die Deaktivierung der katalytischen Beschichtung führt aber dazu, dass Emissionsgrenzwerte nicht eingehalten werden können.

Eine Lösung könne sein, dass eine räumliche Trennung des Katalysators und des Partikelfilters realisiert ist. Der Katalysator wird dabei stromaufwärts des Partikelfilters angeordnet und dient der Umwandlung bzw. Oxidation und Reduktion von gasförmigen Emissionen. Der Partikelfilter dient der Abscheidung von Feststoffen. Allerdings sind getrennte Abgasbehandlungseinheiten, also ein Katalysator einerseits und ein Partikelfilter andererseits, teurer in der Herstellung und beanspruchen mehr Bauraum. Zudem erhöht sich so der Aufwand für die Regeneration des Partikelfilters, da er stromabwärts des Katalysators angeordnet ist.

Weiter könnte einerseits ein Sonderöl eingesetzt werden, um die Aschebildung zu reduzieren und andererseits der Ölverbrauch reduziert werden.

Sonderöle sind allerdings teuer und reduzieren zudem nur die Bildung von Asche. Eine Reduzierung des Ölverbrauchs ist aufwendig und kann dabei nur in engen Grenzen erfolgen.

Weiter könnte das Volumen des Partikelfilter erhöht werden, um so die Abscheidung auf eine größere Oberfläche zu verteilen, wobei - insbesondere gleichzeitig - zudem die Edelmetallbeladung der katalytischen Beschichtung erhöht wird. Neben den höheren Kosten, unter anderem für die zusätzliche Edelmetallbeladung, sind hier selbstverständlich auch Grenzen für den benötigen Bauraum zu beachten.

Die EP 2 696 047 A1 offenbart ein Verfahren zur Abgasreinigung, wobei eine Beladung eines Katalysators mit Asche ermittelt und in Abhängigkeit davon ein fettes Abgas bereitgestellt wird.

Die US 2010/205936 A1 offenbart eine Vorrichtung zur Abgasreinigung, umfassend ein NOx-Speicher-Katalysator und einen Partikelfilter, wobei die Strömungsrichtung des Abgases durch die Vorrichtung umkehrbar ist.

Die US 9 399 185 B2 betrifft ein Partikelfilter-Kontrollsystem sowie ein Verfahren zur Kontrolle desselben.

Die WO 2017/092839 A1 betrifft ein Verfahren zur Abgasbehandlung. In der Abgasleitung sind nacheinander ein Partikelfilter und ein SCR-Katalysator angeordnet.

Die DE 10 2017 116 405 A1 betrifft ein Verfahren zur Bestimmung der Beladung eines Partikelfilters.

Aufgabe der vorliegenden Erfindung ist es, die mit Bezug auf den Stand der Technik angeführten Probleme zumindest teilweise zu lösen. Insbesondere soll ein Verfahren zum Betrieb einer Abgasanlage vorgeschlagen werden, durch das ein Anstieg von Emissionen gerade in Kaltstartsituationen verringert oder sogar verhindert wird.

Zur Lösung dieser Aufgaben trägt ein Verfahren mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Verfahren zum Betrieb einer Abgasanlage vorgeschlagen, wobei die Abgasanlage stromabwärts einer Verbrennungskraftmaschine angeordnet ist und entlang einer Strömungsrichtung eines Abgases eine erste Abgasbehandlungsvorrichtung, umfassend zumindest einen Partikelfilter und einen ersten Katalysator, sowie einen zweiten Katalysator aufweist. Das Verfahren weist zumindest die folgenden Schritte auf:
a) Ermitteln einer Beladung des ersten Katalysators mit Asche, die eine katalytisch wirksame erste Beschichtung des ersten Katalysators zumindest teilweise deaktiviert; und
   wenn infolge der ermittelten Beladung eine nur unzureichende Umsetzung von gasförmigen Emissionen im ersten Katalysator erwartet wird, wobei eine unzureichende Umsetzung von gasförmigen Emissionen dann vorliegt, wenn die gesetzlich vorgeschriebenen Emissionen überschritten werden,
b) Erstellen einer light-off-Heizstrategie für den zweiten Katalysator in Abhängigkeit von der in Schritt a) ermittelten Beladung; und
c) Einleiten der in Schritt b) ermittelten light-off-Heizstrategie zur (beschleunigten) Aufheizung des zweiten Katalysators (zur Erreichung einer light-off Temperatur).

Asche ist insbesondere ein fester Rückstand aus der Verbrennung organischen Materials, also von fossilen Brennstoffen, Biokraftstoffen oder Lebewesen wie Pflanzen und Tieren. Sie entsteht aus dem anorganischen Teil der verbrannten Substanz und besteht somit aus Mineralstoffen. Asche besteht vor allem aus Oxiden und (Bi-)Karbonaten diverser Metalle, z. B. CaO, Fe₂O₃, MgO, MnO, P₂O₅, K₂O, SiO₂, Na₂CO₃, NaHCO₃ etc.

Eine unzureichende Umsetzung von gasförmigen Emissionen liegt dann vor, wenn die gesetzlich vorgeschriebenen Emissionen überschritten werden.

Der stromabwärts des Partikelfilters angeordnete zweite Katalysator kann die Abgasreinigung für die gasförmigen Emissionen übernehmen, wenn der erste Katalysator für eine effektive Umsetzung nicht mehr einsetzbar ist. Der zweite Katalysator kann jedoch so weit stromabwärts der Verbrennungskraftmaschine angeordnet sein, dass eine Temperatur, bei der die gasförmigen Emissionen katalytisch umgewandelt werden können (sogenannte light-off Temperatur), sehr spät erreicht wird. Hier wird vorgeschlagen, dass zumindest der zweite Katalysator gezielt beheizt wird, so dass z. B. auch nach Kaltstarts eine effektive Umsetzung der gasförmigen Emissionen (zur Erreichung der gesetzlich vorgeschriebenen Emissionsgrenzen) möglich ist.

Die Beheizung des zweiten Katalysators kann über eine innermotorische Maßnahme und/oder spezielle Heizeinrichtungen (elektrische Heizeinrichtung, Sekundärlufteinbringung zur Einleitung von oxidativen und exothermen Reaktionen, etc.) erfolgen.

Der zweite Katalysator ist insbesondere in Strömungsrichtung des Abgases beabstandet von dem Partikelfilter angeordnet. Bevorzugt ist der zweite Katalysator unmittelbar stromaufwärts von einem Auslass der Abgasanlage angeordnet. Über den Auslass verlässt das Abgas die Abgasanlage und strömt in die Umgebung.

Der Partikelfilter ist insbesondere ein Partikelfilter für Otto-Motoren bzw. für derartig ausgelegte Abgasanlagen. Dabei ist der Partikelfilter insbesondere ein für diesen Zweck (also für die Abscheidung von Partikeln aus dem Abgasstrom) konzipiertes Bauteil und gerade nicht nur eine Oberfläche der Abgasleitung oder Ähnliches.

Der zweite Katalysator ist insbesondere ein sogenannter Drei-Wege-Katalysator, durch den insbesondere Kohlenstoffmonoxid (CO), Stickoxide (NOx) und unverbrannte Kohlenwasserstoffe (HC) zu Kohlenstoffdioxid (CO₂), Stickstoff (N₂) und Wasser (H₂O) umgewandelt werden können.

Die Ermittlung (oder Berechnung) der Beladung in Schritt a) kann anhand eines Modellwertes erfolgen. Dieses Modell kann in einer Steuereinheit des Kraftfahrzeuges hinterlegt sein, so dass in Abhängigkeit von Betriebspunkten der Verbrennungskraftmaschine (Anzahl und Dauer der Betriebspunkte mit hoher oder geringer Erzeugung von Asche), Laufzeit (Beladung mit Asche wird kontinuierlich ansteigen), Laufleistung (Beladung mit Asche wird kontinuierlich ansteigen), Kraftstoffart und -qualität (Bildung von Asche wird hierdurch beeinflusst), usw. die Beladung mit Asche rechnerisch ermittelt werden kann.

Die Beladung wird insbesondere durch die Menge oder das Gewicht an Asche in Bezug auf die für das Abgas erreichbare Oberfläche der ersten Beschichtung angegeben. Insbesondere werden die Schritte b) und c) dann durchgeführt, wenn infolge der Beladung eine erhöhte light-off-Temperatur des ersten Katalysators oder eine trotz Erreichen der light-off Temperatur (für den Emissionsausstoß relevante) reduzierte Umsetzung von Emissionen durch die erste Beschichtung erwartet wird.

Die Erstellung der Heizstrategie für den zweiten Katalysator kann unter Berücksichtigung der in Schritt a) ermittelten Beladung erfolgen. Die Heizstrategie beinhaltet zumindest eine der folgenden Maßnahmen: die Festlegung der Geschwindigkeit einer Aufheizung, den Startpunkt einer Aufheizung, das Maß einer Aufheizung, den Verlauf einer Aufheizung und das Ende einer Aufheizung.

Insbesondere bilden der Partikelfilter und der erste Katalysator eine Baueinheit, bei der eine Ablagerung der Asche auf dem Partikelfilter, die in dem Partikelfilter vorliegende erste Beschichtung (zunehmend) deaktiviert.

Der Partikelfilter nimmt über seine für das Abgas verfügbare Oberfläche Ruß und Asche auf, wobei Ruß sukzessive umgesetzt werden kann (Regeneration des Partikelfilters). Die Asche lässt sich jedoch nicht entfernen, so dass die ebenfalls auf der Oberfläche vorhandene katalytische erste Beschichtung zunehmend abgedeckt und gegenüber dem Abgas bzw. den darin enthaltenen gasförmigen Emissionen deaktiviert wird.

Insbesondere ist der Partikelfilter für Abgase eines Otto-Motors eingerichtet, also ein Otto-Partikel-Filter. Insbesondere ist die Verbrennungskraftmaschine ein Otto-Motor.

Insbesondere sind der erste Katalysator und der zweite Katalysator jeweils Drei-Wege-Katalysatoren.

Die Aufheizung des zweiten Katalysators kann zumindest teilweise (und/oder zeitweise) durch eine Erhöhung einer Temperatur des Abgases stromaufwärts des zweiten Katalysators erfolgen.

Dabei kann die Erhöhung insbesondere durch innermotorische Maßnahmen eingeleitet werden, z. B. durch einen Betrieb der Verbrennungskraftmaschine mit einem fetteren Gemisch, wobei unverbrannte Kohlenwasserstoffe stromabwärts der Verbrennungskraftmaschine oxidativ umgesetzt werden.

Die Aufheizung des zweiten Katalysators kann zumindest teilweise durch eine Erhöhung einer Temperatur des Abgases innerhalb des zweiten Katalysators erfolgen.

Insbesondere kann der zweite Katalysator eine (in den zweiten Katalysator integrierte) elektrische Heizeinrichtung umfassen, durch die der zweite Katalysator beheizbar ist.

Alternativ oder zusätzlich kann eine Sekundärlufteinbringung (unmittelbar) stromaufwärts von dem zweiten Katalysator angeordnet sein, so dass gezielt eingebrachte unverbrannte Kohlenwasserstoffe im zweiten Katalysator zur Beheizung des zweiten Katalysators umgesetzt werden können. Die Sekundärlufteinbringung kann auch stromaufwärts von dem Partikelfilter angeordnet sein, so dass diese auch zur Regeneration des Partikelfilters einsetzbar ist.

Es wird weiter eine Abgasanlage für eine Verbrennungskraftmaschine vorgeschlagen, wobei die Abgasanlage stromabwärts der Verbrennungskraftmaschine anordenbar ist und eine Steuereinheit, sowie entlang einer Strömungsrichtung eines Abgases eine erste Abgasbehandlungsvorrichtung, umfassend zumindest einen Partikelfilter und einen ersten Katalysator, sowie einen zweiten Katalysator. Die Steuereinheit ist zur Durchführung des hier beschriebenen Verfahrens geeignet ausgeführt und eingerichtet.

Insbesondere weist der zweite Katalysator eine Heizeinrichtung auf und/oder es ist eine Sekundärlufteinbringung (insbesondere stromabwärts des Partikelfilters und) stromaufwärts von dem zweiten Katalysator angeordnet.

Weiter wird ein Kraftfahrzeug mit einer Verbrennungskraftmaschine und einer vorstehend beschriebenen Abgasanlage vorgeschlagen.

Die Ausführungen zu dem Verfahren gelten insbesondere gleichermaßen für die Abgasanlage und das Kraftfahrzeug und umgekehrt.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll.

Insbesondere ist darauf hinzuweisen, dass die Figuren und insbesondere die dargestellten Größenverhältnisse nur schematisch sind. Es zeigen:
- Fig. 1:: ein Kraftfahrzeug mit einer Abgasanlage;
- Fig. 2:: ein Diagramm, in dem die Stickoxidemissionen in [mg/s] über der Zeit für eine im NEFZ-Fahrprofil betriebene Verbrennungskraftmaschine dargestellt sind;
- Fig. 3:: ein Diagramm, in dem die (kumulierten) Stickoxidemissionen in [mg/km] über der Zeit für eine im NEFZ-Fahrprofil betriebene Verbrennungskraftmaschine dargestellt sind; und
- Fig. 4:: ein Diagramm, in dem die Temperatur in [Grad Celsius] über der Zeit für eine im NEFZ-Fahrprofil betriebene Verbrennungskraftmaschine dargestellt sind.

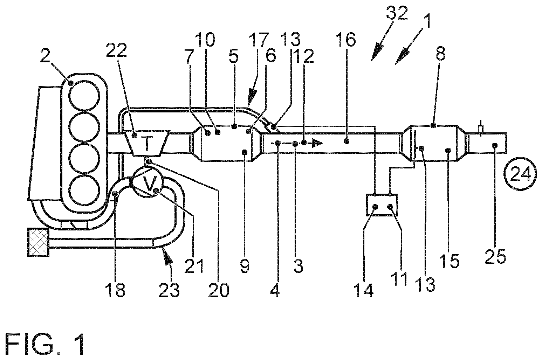

Die Figur 1 zeigt ein Kraftfahrzeug 32 mit einer Verbrennungskraftmaschine 2 und Abgasanlage 1. Die Abgasanlage 1 ist stromabwärts der Verbrennungskraftmaschine 2 angeordnet und weist entlang einer Strömungsrichtung 3 eines Abgases 4 eine erste Abgasbehandlungsvorrichtung 5, umfassend eine Abgasleitung 16 mit einem Partikelfilter 6 und einem ersten Katalysator 7, sowie einem zweiten Katalysator 8 auf. Der erste Katalysator 7 weist eine katalytisch wirksame erste Beschichtung 9 und der zweite Katalysator eine (vergleichbare) zweite Beschichtung 15 auf. Ausgehend von der Verbrennungskraftmaschine 2 durchströmt das Abgas 4 die Abgasleitung 16 zunächst durch eine Turbine 22 eines Turboladers 20, nachfolgend durch ersten Katalysator 7, Partikelfilter 6, zweiten Katalysator 8 und über den Auslass 25 an die Umgebung 24.

Der Turbolader 20 umfasst weiter einen Verdichter 21, der in einem Luftversorgungssystem 23 des Kraftfahrzeuges 32 angeordnet ist. Über die Ansaugleitung 18 wird Luft zur Verbrennungskraftmaschine 2 geführt. Weiter kann über eine Luftleitung 19 Luft einer als Heizeinrichtung 13 vorgesehenen Sekundärlufteinbringung 17 zugeführt werden.

Über die Steuereinheit 14 kann eine, eine katalytisch wirksame erste Beschichtung 9 des ersten Katalysators 7 zumindest teilweise deaktivierenden Beladung 10 durch Asche ermittelt werden. Weiter kann über die Steuereinheit 14, wenn infolge der ermittelten Beladung 10 eine nur unzureichende Umsetzung von gasförmigen Emissionen im ersten Katalysator 7 erwartet wird, eine Heizstrategie für den zweiten Katalysator 8 in Abhängigkeit von der ermittelten Beladung 10 ermittelt werden. Diese Heizstrategie kann zur beschleunigten Aufheizung des zweiten Katalysators 8 zur Erreichung einer light-off Temperatur 12 eingeleitet werden.

Die Ermittlung der Beladung 10 kann anhand eines Modellwertes 11 erfolgen. Dieses Modell kann in der Steuereinheit 14 des Kraftfahrzeuges 32 hinterlegt sein, so dass in Abhängigkeit von Betriebspunkten der Verbrennungskraftmaschine 2, von Laufzeit, Laufleistung, Kraftstoffart und - qualität, usw. die Beladung mit Asche rechnerisch ermittelt werden kann.

Hier bilden der Partikelfilter 6 und der erste Katalysator 7 eine Baueinheit, bei der eine Ablagerung der Asche auf dem Partikelfilter 6, die in dem Partikelfilter vorliegende erste Beschichtung 9 (zunehmend) deaktiviert.

Die Aufheizung des zweiten Katalysators 8 kann durch eine Erhöhung einer Temperatur 12 des Abgases 4 stromaufwärts des zweiten Katalysators 8 erfolgen. Dabei kann die Erhöhung insbesondere durch innermotorische Maßnahmen eingeleitet werden, z. B. durch einen Betrieb der Verbrennungskraftmaschine 2 mit einem fetteren Gemisch, wobei unverbrannte Kohlenwasserstoffe stromabwärts der Verbrennungskraftmaschine 2 oxidativ umgesetzt werden. Dafür ist hier eine Sekundärlufteinbringung 17 unmittelbar stromaufwärts von dem zweiten Katalysator 8 angeordnet, so dass gezielt eingebrachte unverbrannte Kohlenwasserstoffe im zweiten Katalysator 8 zur Beheizung des zweiten Katalysators 8 umgesetzt werden können. Die Aufheizung des zweiten Katalysators 8 kann zumindest teilweise auch durch eine Erhöhung einer Temperatur 12 des Abgases 4 innerhalb des zweiten Katalysators 8, hier durch die elektrische Heizeinrichtung 13 erfolgen.

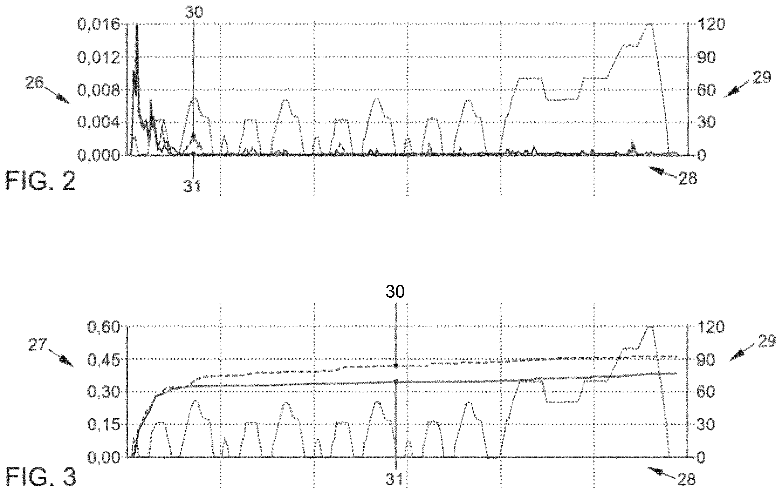

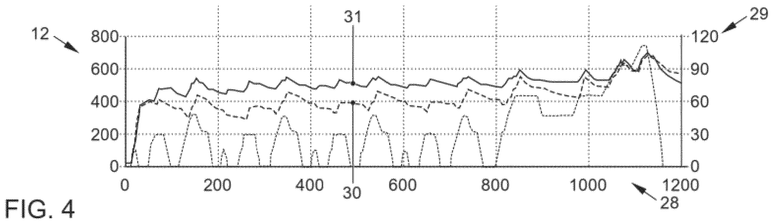

Fig. 2 zeigt ein Diagramm, in dem die Stickoxidemissionen 26 in [mg/s] über der Zeit 28 für eine im NEFZ-Fahrprofil (siehe Geschwindigkeit 29 an der rechten, vertikalen Achse) betriebene Verbrennungskraftmaschine 2 dargestellt sind. Fig. 3 zeigt ein Diagramm, in dem die (kumulierten) Stickoxidemissionen 27 in [mg/km] über der Zeit 28 für dieselbe im NEFZ-Fahrprofil betriebene Verbrennungskraftmaschine 2 dargestellt sind. Fig. 4 zeigt ein Diagramm, in dem die Temperatur 12 in [Grad Celsius] über der Zeit 28 für die im NEFZ-Fahrprofil betriebene Verbrennungskraftmaschine 2 dargestellt sind. Die Fig. 2 bis 4 werden im Folgenden gemeinsam beschrieben.

Ein Fahrzyklus legt fest, unter welchen Bedingungen und mit welchen Geschwindigkeitsabläufen ein Kraftfahrzeug bei der Ermittlung von Energieverbrauch bzw. Kraftstoffverbrauch und CO2-Emission bei Kraftfahrzeugen mit Verbrennungsmotor, betrieben wird. Die Überprüfung eines Kraftfahrzeugs durch einen Fahrzyklus ist ein Bestandteil der Herstellerangaben, die für Zulassung und Vertrieb der Kraftfahrzeuge erforderlich sind.

Das NEFZ-Fahrprofil ist durch den NEFZ, also den Neuen Europäischen Fahrzyklus definiert.

In jedem Diagramm sind ein erster Verlauf 30 und ein zweiter Verlauf 31 sowie ein Profil der Geschwindigkeit 29 des Kraftfahrzeuges dargestellt. Der erste Verlauf 30 bezeichnet die Stickoxidemissionen 26, die Stickoxidemissionen 27 sowie die Temperatur 12 während eines bekannten Verfahrens (also ohne Beheizung des zweiten Katalysators 8 und bei infolge der Beladung 10 mit Asche deaktivierter erster Beschichtung 9). Der zweite Verlauf 31 zeigt die Stickoxidemissionen 26, die Stickoxidemissionen 27 sowie die Temperatur 12 während des vorgeschlagenen Verfahrens (auch bei infolge der Beladung 10 mit Asche deaktivierter erster Beschichtung 9), wobei hier der zweite Katalysator 8 frühzeitig über eine Heizeinrichtung 13 beheizt wird, so dass dieser eine light-off Temperatur 12 früher erreichen und dauerhaft halten kann. Erkennbar können die Stickoxidemissionen 26, 27 durch die Erhöhung der Temperatur 12 reduziert werden.

### Bezugszeichenliste

- 1: Abgasanlage
- 2: Verbrennungskraftmaschine
- 3: Strömungsrichtung
- 4: Abgas
- 5: erste Abgasbehandlungsvorrichtung
- 6: Partikelfilter
- 7: erster Katalysator
- 8: zweiter Katalysator
- 9: erste Beschichtung
- 10: Beladung
- 11: Modellwert
- 12: Temperatur [Grad Celsius]
- 13: Heizeinrichtung
- 14: Steuereinheit
- 15: zweite Beschichtung
- 16: Abgasleitung
- 17: Sekundärlufteinbringung
- 18: Ansaugleitung
- 19: Luftleitung
- 20: Turbolader
- 21: Verdichter
- 22: Turbine
- 23: Luftversorgungssystem
- 24: Umgebung
- 25: Auslass
- 26: Stickoxidemission [Milligramm/Sekunde]
- 27: Stickoxidemission [Milligramm/Kilometer]
- 28: Zeit [Sekunde]
- 29: Geschwindigkeit [Kilometer/Stunde]
- 30: erster Verlauf
- 31: zweiter Verlauf
- 32: Kraftfahrzeug

## Patentansprüche

1. Verfahren zum Betrieb einer Abgasanlage (1), wobei die Abgasanlage (1) stromabwärts einer Verbrennungskraftmaschine (2) angeordnet ist und entlang einer Strömungsrichtung (3) eines Abgases (4) eine erste Abgasbehandlungsvorrichtung (5), umfassend zumindest einen Partikelfilter (6) und einen ersten Katalysator (7), sowie einen zweiten Katalysator (8) aufweist; wobei das Verfahren zumindest die folgenden Schritte umfasst:
a) Ermitteln einer Beladung (10) des ersten Katalysators (7) mit Asche, die eine katalytisch wirksame erste Beschichtung (9) des ersten Katalysators (7) zumindest teilweise deaktiviert; und
wenn infolge der ermittelten Beladung (10) eine nur unzureichende Umsetzung von gasförmigen Emissionen im ersten Katalysator (7) erwartet wird; wobei eine unzureichende Umsetzung von gasförmigen Emissionen dann vorliegt, wenn die gesetzlich vorgeschriebenen Emissionen überschritten werden;
b) Erstellen einer light-off-Heizstrategie für den zweiten Katalysator (8) in Abhängigkeit von der in Schritt a) ermittelten Beladung (10); und
c) Einleiten der in Schritt b) ermittelten light-off-Heizstrategie zur Aufheizung des zweiten Katalysators (8).

2. Verfahren nach Patentanspruch 1, wobei die Ermittlung der Beladung (10) in Schritt a) anhand eines Modellwertes (11) erfolgt.

3. Verfahren nach einem der vorhergehenden Patentansprüche, wobei der Partikelfilter (6) und der erste Katalysator (7) eine Baueinheit bilden, bei der eine Ablagerung der Asche auf dem Partikelfilter (6) die in dem Partikelfilter (6) vorliegende und den ersten Katalysator (7) bildende erste Beschichtung (9) deaktiviert.

4. Verfahren nach einem der vorhergehenden Patentansprüche, wobei die Verbrennungskraftmaschine (2) ein Otto-Motor ist.

5. Verfahren nach einem der vorhergehenden Patentansprüche, wobei der erste Katalysator (7) und der zweite Katalysator (8) jeweils Drei-Wege-Katalysatoren sind.

6. Verfahren nach einem der vorhergehenden Patentansprüche, wobei die Aufheizung des zweiten Katalysators (8) zumindest teilweise durch eine Erhöhung einer Temperatur (12) des Abgases (4) stromaufwärts des zweiten Katalysators (8) erfolgt.

7. Verfahren nach einem der vorhergehenden Patentansprüche, wobei die Aufheizung des zweiten Katalysators (8) zumindest teilweise durch eine Erhöhung einer Temperatur (12) des Abgases (4) innerhalb des zweiten Katalysators (8) erfolgt.

8. Verfahren nach Patentanspruch 7, wobei der zweite Katalysator (8) eine elektrische Heizeinrichtung (13) umfasst.

9. Abgasanlage (1) für eine Verbrennungskraftmaschine (2), wobei die Abgasanlage (1) stromabwärts der Verbrennungskraftmaschine (2) anordenbar ist und eine Steuereinheit (14) sowie entlang einer Strömungsrichtung (3) eines Abgases (4) eine erste Abgasbehandlungsvorrichtung (5), umfassend zumindest einen Partikelfilter (6) und einen ersten Katalysator (7), sowie einen zweiten Katalysator (8) aufweist; wobei die Steuereinheit (14) zur Durchführung des Verfahrens nach einem der vorhergehenden Patentansprüche eingerichtet ist.

10. Abgasanlage nach Patentanspruch 9, wobei der zweite Katalysator (8) eine Heizeinrichtung (13) aufweist.

## Claims

1. Method of operating an exhaust gas system (1), wherein the exhaust gas system (1) is arranged downstream of an internal combustion engine (2) and, in a flow direction (3) of an exhaust gas (4), has a first exhaust gas treatment device (5) comprising at least one particulate filter (6) and a first catalytic converter (7), and also a second catalytic converter (8); wherein the method comprises at least the following steps:
a) ascertaining a loading (10) of the first catalytic converter (7) with ash that at least partly deactivates a catalytically active first coating (9) of the first catalytic converter (7); and
when, as a result of the loading (10) ascertained, only inadequate conversion of gaseous emissions in the first catalytic converter (7) is expected; there being inadequate conversion of gaseous emissions if the legally stipulated emissions are exceeded;
b) creating a light-off heating strategy for the second catalytic converter (8) depending on the loading (10) ascertained in step a); and
c) initiating the light-off heating strategy ascertained in step b) for heating of the second catalytic converter (8).

2. Method according to Claim 1, wherein the loading (10) is ascertained in step a) using a model value (11).

3. Method according to either of the preceding claims, wherein the particulate filter (6) and the first catalytic converter (7) form one assembly in which deposition of the ash on the particulate filter (6) deactivates the first coating (9) which is present in the particulate filter (6) and forms the first catalytic converter (7).

4. Method according to any of the preceding claims, wherein the internal combustion engine (2) is a petrol engine.

5. Method according to any of the preceding claims, wherein the first catalytic converter (7) and the second catalytic converter (8) are each three-way catalytic converters.

6. Method according to any of the preceding claims, wherein the second catalytic converter (8) is heated at least partly by an increase in the temperature (12) of the exhaust gas (4) upstream of the second catalytic converter (8).

7. Method according to any of the preceding claims, wherein the second catalytic converter (8) is heated at least partly by an increase in the temperature (12) of the exhaust gas (4) within the second catalytic converter (8).

8. Method according to Claim 7, wherein the second catalytic converter (8) comprises an electrical heating device (13).

9. Exhaust gas system (1) for an internal combustion engine (2), wherein the exhaust gas system (1) can be arranged downstream of the internal combustion engine (2) and has a control unit (14) and, in a flow direction (3) of an exhaust gas (4), has a first exhaust gas treatment device (5) comprising at least one particulate filter (6) and a first catalytic converter (7), and also a second catalytic converter (8); wherein the control unit (14) is set up to conduct the method according to any of the preceding claims.

10. Exhaust gas system according to Claim 9, wherein the second catalytic converter (8) has a heating device (13).

## Revendications

1. Procédé de fonctionnement d'un système à gaz d'échappement (1), le système à gaz d'échappement (1) étant disposé en aval d'un moteur à combustion interne (2) et comportant, le long d'une direction d'écoulement (3) d'un gaz d'échappement (4), un premier dispositif de traitement de gaz d'échappement (5), pourvu d'au moins un filtre à particules (6) et d'un premier catalyseur (7), ainsi qu'un deuxième catalyseur (8) ; le procédé comprenant au moins les étapes suivantes :
a) déterminer une charge (10) du premier catalyseur (7) avec de la cendre qui désactive au moins partiellement un premier revêtement (9), catalytiquement actif, du premier catalyseur (7) ; et
si, en raison de la charge déterminée (10), une conversion seulement insuffisante d'émissions gazeuses est attendue dans le premier catalyseur (7) ; la conversion insuffisante d'émissions gazeuses n'étant présente que si les émissions prescrites par la loi sont dépassées ;
b) créer une stratégie de chauffage d'allumage pour le deuxième catalyseur (8) en fonction de la charge (10) déterminée à l'étape a) ; et
c) lancer la stratégie de chauffage d'allumage déterminée à l'étape b) pour chauffer le deuxième catalyseur (8).

2. Procédé selon la revendication 1, la détermination de la charge (10) à l'étape a) étant effectuée à partir d'une valeur modèle (11).

3. Procédé selon l'une des revendications précédentes, le filtre à particules (6) et le premier catalyseur (7) formant une unité structurelle dans laquelle un dépôt de cendre sur le filtre à particules (6) désactive le premier revêtement (9) présent dans le filtre à particules (6) et formant le premier catalyseur (7).

4. Procédé selon l'une des revendications précédentes, le moteur à combustion interne (2) étant un moteur Otto.

5. Procédé selon l'une des revendications précédentes, le premier catalyseur (7) et le deuxième catalyseur (8) étant des catalyseurs à trois voies.

6. Procédé selon l'une des revendications précédentes, le deuxième catalyseur (8) étant chauffé au moins partiellement par augmentation d'une température (12) des gaz d'échappement (4) en amont du deuxième catalyseur (8).

7. Procédé selon l'une des revendications précédentes, le deuxième catalyseur (8) étant chauffé au moins partiellement par augmentation d'une température (12) des gaz d'échappement (4) à l'intérieur du deuxième catalyseur (8).

8. Procédé selon la revendication 7, le deuxième catalyseur (8) comprenant un moyen de chauffage électrique (13).

9. Système à gaz d'échappement (1) destiné à un moteur à combustion interne (2), le système à gaz d'échappement (1) pouvant être disposé en aval du moteur à combustion interne (2) et comportant une unité de commande (14) et, le long d'une direction d'écoulement (3) d'un gaz d'échappement (4), un premier dispositif de traitement de gaz d'échappement (5), pourvu d'au moins un filtre à particules (6) et d'un premier catalyseur (7), ainsi qu'un deuxième catalyseur (8) ; l'unité de commande (14) étant conçue pour mettre en oeuvre le procédé selon l'une des revendications précédentes.

10. Système à gaz d'échappement selon la revendication 9, le deuxième catalyseur (8) comportant un moyen de chauffage (13).
